# EUROPEAN PATENT APPLICATION

(11) **EP 1 698 300 A1**
(43) Date of publication of application: **06.09.2006**
(21) Application number: 06009589.0
(22) Date of filing: 19.03.1998
(51) Int. Cl.: A61C 17/08

(54) **Illuminated suction tool with a disposable tip**

(62) Divisional of application: 98914264.1
(71) Applicant: Davis, Warren, Las Vegas, NV 89123 (US); Wasserman, David, Las Vegas, Nevada 89109 (US)
(72) Inventor: Davis, Warren, Las Vegas, NV 89123 (US); Wasserman, David, Las Vegas, Nevada 89109 (US)
(74) Representative: Chettle, Adrian John

(57) **Abstract**

A dental suction tool has a disposable sanitary plastic suction tip to prevent cross contamination from one patient to the next. The tip has a bevel at the proximal end. Additionally, a light source such as a fibreoptic bundle with or without a ring light is provided on the interior of the dental suction tool to provide light to the end of the plastic disposable suction tip. Illumination from the ring light or directly from the fibreoptic bundle is transmitted along the length of the suction tip and is emitted from the end thereof to illuminate the oral cavity during dental procedures.

## Description

### Background of the Invention

This invention relates to a suction tool, and more particularly to suction tool with a disposable tip that also provides illumination to the oral cavity of the patient.

The present invention was developed to add further function to the widely accepted evacuation systems currently used for suction or aspiration. The concept of suction or aspiration in the dental office has its roots in the old fashioned spittoon. The spittoon was later replaced by the gravity flow cuspidor, then by the flush cup and finally by the suction tip/aspirator tip/vacuum tip which are interchangeable terms varying by the user and based on the size of the aperture in the device.

These dental suction instruments are used by dentists to remove fluids and other foreign objects that accrue in the patient's oral cavity during typical dental procedures. The conventional dental suction tool comprises a suction tip connected by a long tubing to a vacuum source. The dental suction tool can be configured to hang in the corner of the patient's mouth or is manipulated by the dentist to suction the oral cavity.

With the rising incidence of communicable diseases such as hepatitis and acquired immune deficiency syndrome, extreme care must be taken to prevent the transmission of germs (viral or bacteria) from one patient to the next. With the conventional suction devices, it is necessary to sterilize at least the tip of the suction device after each patient use. During the use of the suction device, water, saliva and blood from the patient's mouth is drawn into the tip for removal from the oral cavity. If cleaning and sterilization is not effected, it would be very easy to transfer infection from one patient to the next. Also, latent bacterial growth can be promoted in both the tip and the entire vacuum suction system lines because of the existence of this potentially contaminating material. To further mitigate this possibility of cross-contamination from one patient to the next, the routine sterilization of suction tips is desirable.

It is desirable to also supply light into the oral cavity to assist the dentist in performing necessary dental procedures. Most dental operatories have an overhead task lighting system with reflective surfaces that help concentrate the light on the patient's mouth. However, the dentist will often stand in the path of the light which minimizes the effectiveness of the overhead light. One of the major nuisances and frustrations in the practice of dentistry is the constant need for the dentist to spend time adjusting the direction of this overhead lighting.

Various dental tools have been provided with a light source to assist the dentist during various dental activities. For example, a typical dental drill will include a fiberoptic bundle that transmits light from a light source to the end of the dental drill which allows the dentist to provide light directly to the area in which the drilling is occurring. Representative of this technology are the disclosures shown in U.S. Patent No. 4,507,085 (Mosimann) and U.S. Patent No. 5,088,924 (Woodward).

Dental syringe tip handpieces have also been provided with a light source to illuminate the area into which the air and/or water are to be sprayed. Representative of these devices is the disclosure of U.S. Patent No. 4,619,612 (Weber) which shows a fiberoptic bundle disposed down the center of a metal syringe tip assembly. A light bulb acts as the light source and is disposed in the interior of the handpiece. The syringe tip used in the disclosure of the Weber patent is a metal, non-disposable syringe tip which must be autoclaved prior to use on the next patient.

Previous attempts to use light in conjunction with a suction tip were done by running a fiberoptic bundle tangent and parallel to the suction tip. The optical conduit for the fiberoptic bundle was fixed to the suction tip by a series of clamps along the length of the suction tip. However, the results from this configuration were less than desirable for several reasons.

The fiberoptic bundles that were attached to the suction tips still needed to be sterilized before being used on the next patient. Fiberoptic bundles are not particularly amenable to the heat of sterilization and the expense and inconvenience of frequent replacement of these fiberoptic bundles can be prohibitive. It is also necessary to clean up the areas on the suction tip at which the clamps are attached and this can be quite cumbersome and time consuming. Another problem with this fiberoptic bundle configuration is that the light is positioned off-center from the suction tip so that the light being transmitted into the oral cavity of the patient still casts shadows from the suction tip, itself, which can do more harm than good.

The novel concept developed herein is to transmit light to the field of operation by transmitting a light source through a transparent plastic material which simultaneously serves as the suction tip of the dental suction device. The fact that the light is centered relative to the suction tip minimizes any shadows in the oral cavity and reduces the need for the dentist to rely on his overhead task lighting, which is constantly in need of adjustment.

It is proposed that the use of the present invention in conjunction with the light source that is coupled to the air/water syringe tip will provide sufficient light in the patient's oral cavity to obviate the need for the overhead task lighting and eliminate the time spent constantly adjusting this task lighting.

It is an object of the present invention to provide a disposable suction tip as part of the dental suction tool so that each patient can receive a clean and uncontaminated suction tip.

It is a feature of the present invention that the suction tip portion of a dental suction tool is made from a disposable plastic material.

It is an advantage of the present invention that cross-contamination between patients due to improperly cleaned or sterilized suction tips is eliminated because each patient is provided with a new, clean and uncontaminated suction tip that is only used on that patient.

It is a further object of the present invention to provide means for properly aligning the suction tip in the dental suction tool.

It is a further feature of the present invention to provide at one end of the suction tip at least one beveled section along an outer wall surface of the suction tip so that the suction tip can be properly aligned in the dental suction tool. Alternatively, one end of the suction tip is provided with at least one recess that is adapted to cooperate with a keying element in the dental suction tool to properly align the suction tip in the dental suction tool.

It is a further advantage of the present invention that a dentist will be able to properly align the suction tip in the dental suction tool.

It is a further object of the present invention to provide a useful source of light that can be transmitted into the oral cavity of the patient whenever the dentist is using a dental suction tool.

It is a further feature of the present invention to provide a light source at one end of the suction tip on the interior of the adaptor that holds the suction tip in the dental tool. Light from the light source is directed into one end of the suction tip and carried along the length thereof. At the opposite end of the suction tip, the light radiates from the suction tip and can be used to illuminate the oral cavity of the patient.

It is a further advantage of the present invention that a dentist will be able to illuminate the oral cavity using the same instrument that he is using to suction liquids and other foreign matter from the oral cavity of the patient. Any dental procedures that require use of the dental suction tool will be more easily, safely and effectively carried out because the dentist will be able to see exactly where in the oral cavity he is working.

Other objects, features and advantages of the present invention will become apparent from a consideration of the following detailed description.

### Summary of the Invention

A dental suction tool has a disposable sanitary plastic suction tip to prevent cross contamination from one patient to the next. The suction tip is formed as a generally cylindrical hollow tubing and made of disposable plastic material. One end of the suction tip has at least one beveled section along an outer wall surface of the suction tip so that the suction tip can be properly aligned in the dental suction tool. Alternatively, one end of the suction tip has at least one recess that is adapted to cooperate with a keying element in the dental suction tool to properly align the suction tip in the dental suction tool.

Additionally, a light source such as a fiberoptic bundle with or without a ring light is provided on the interior of the dental suction tool to provide light to the end of the plastic disposable suction tip. Illumination from the ring light or directly from the fiberoptic bundle is transmitted along the length of the suction tip and is emitted from the end thereof to illuminate the oral cavity during dental procedures.

### Brief Description of the Drawings

Figure 1 shows an isometric exploded view of the dental suction tool of the present invention.
Figure 2 is a cross sectional view of one embodiment of the dental suction tool of the present invention with the suction valve in the open position.
Figure 3 is a cross sectional view of the dental suction tool of the present invention with the suction valve in the closed position.
Figure 4 shows an isometric exploded view of a modified dental suction tool of the present invention.
Figure 5 shows an isometric view of a modified suction tip of the present invention.
Figure 6 is a cross sectional view of the modified dental suction tool shown in Figure 4 with the suction valve in the open position.
Figure 7 shows an end view of another modified suction tip of the present invention.
Figure 8 is a cross sectional view of another modified dental suction tool with the suction valve in the open position.
Figure 9 is an isometric exploded view of a modified suction tip and its corresponding key element of the present invention.
Figure 10 shows an end view of still another modified suction tip of the present invention.
Figure 11 is a cross sectional view of still another modified dental suction tool with the suction valve in the open position.
Figure 12 is an isometric exploded view of another modified dental suction tool of the present invention.

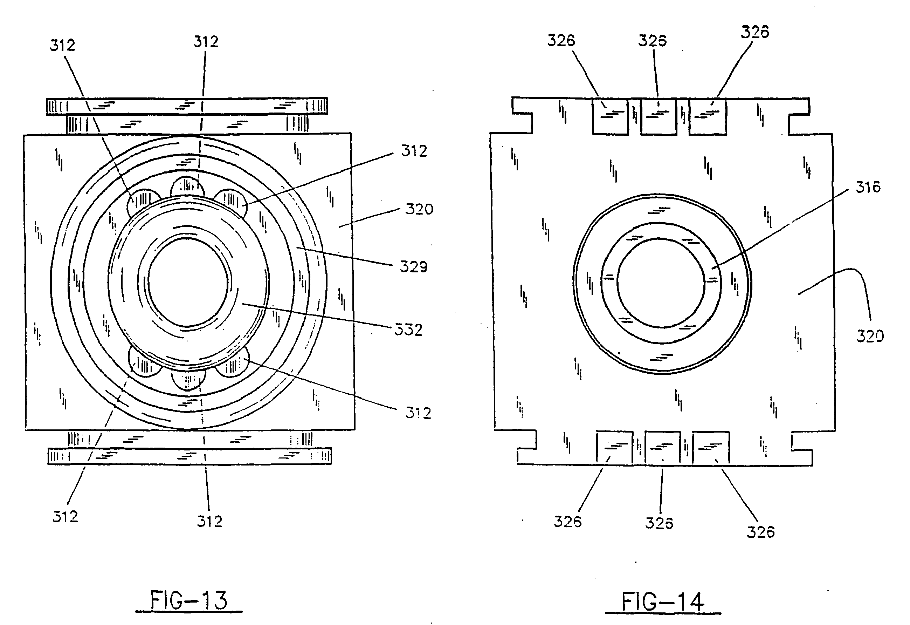

Figure 13 is an end view of the valve body of the modified dental suction tool taken along line 13-13 of Figure 12.

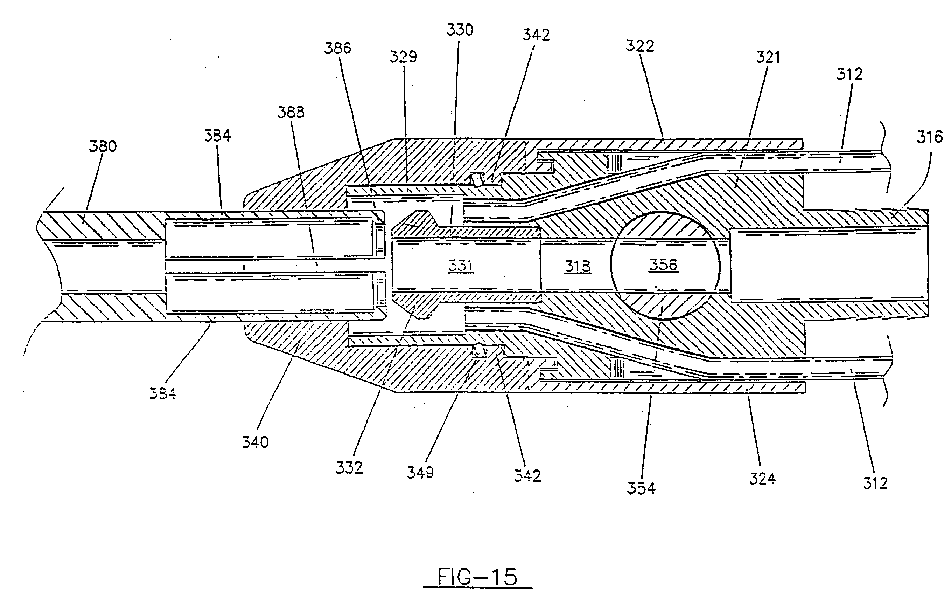

Figure 14 is an end view of the valve body of the modified dental suction tool taken along line 14-14 of Figure 12.
Figure 15 is a cross section view of the modified dental suction tool of Figure 12 before the suction tip is mounted onto the tip bushing.
Figure 16 is a cross section view of the modified dental suction tool of Figure 12 with the suction tip mounted onto the tip bushing.
Figure 17 is an isometric view of the suction tip used in the modified dental suction tool of Figure 12.
Figure 18 is an isometric view of a modified suction tip used in the modified dental suction tool of Figure 12.
Figure 19 is a cross sectional view of another modified suction tip used in the modified dental suction tool of Figure 12.
Figure 20 is a cross sectional view of the modified suction tip of Figure 19 used in the modified dental suction tool of Figure 12.

### Detailed Description of the Preferred Embodiments

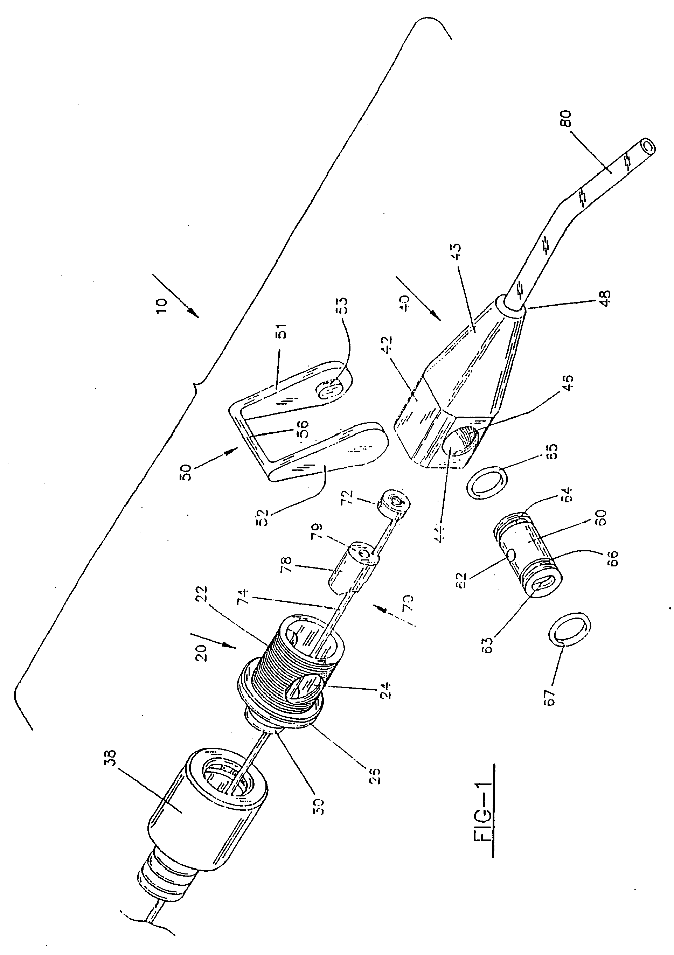

The dental suction tool of the present invention is shown generally at 10 in Figure 1. The dental suction tool 10 comprises a valve cap 20, a valve body 40, a lever 50 and a light assembly 70. A suction tip 80 is mounted in the valve body 40 and the entire dental suction tool 10 is connected to a source of vacuum and electrical power (not shown).

The valve cap 20 comprises an externally threaded cap section 22, preferably configured as a hollow cylinder. On each of the diametrically opposite sides of the threaded cap section 22, a cylinder aperture 24 is provided of sufficient diameter to receive the rotating cylinder 60 therethrough when the dental suction tool 10 is assembled. Toward the rear of the threaded cap section 22, there is provided a cap top 26 and a cap extension 30. The cap extension 30 is provided with an annular groove 32 to receive the tubing connector base 38. The tubing connector base 38 is attached to the tubing (not shown) that runs from the power supply and the vacuum suction supply typically provided at a remote location from the dentist's chair.

The valve body 40 includes a generally hollow threaded body section 42 with a set of internal threads 46 that cooperate and receive the threaded cap section 22 of the valve cap 20 when the valve cap 20 is assembled with the valve body 40. The valve body 40 has a cylinder aperture 44 on its one side and another cylinder aperture (not shown) on the opposite side of the threaded body section 42. These cylinder apertures receive the rotating cylinder 60 when the dental suction tool 10 is assembled.

The rotating cylinder 60 is a generally cylindrical body with a cylinder passageway 62 diametrically therethrough. Each end of the rotating cylinder 60 has a fastening recess shaped to correspond to the fastening pins on the lever 50. One end of the rotating cylinder 60 has an annular groove 66 that receives an O ring 67 and the other end of the rotating cylinder 60 has a like annular groove 64 that receives an O ring 65.

The lever 50 can be of any suitable configuration such as the generally U-shaped configuration shown. The lever 50 has a first side arm 51 with a first fastening connector 53 mounted thereon that fits in the associated first fastening recess (not shown) on the rotating cylinder 60 and a second side arm 52 with a second fastening connector (not shown) that fits in the associated second fastening recess 63 on the rotating cylinder 60. Each of the first side arm 51 and the second side arm 52 are connected by the cross piece 56 so that each arm moves with the other to rotate the rotating cylinder 60 upon movement of the lever 50.

The dental suction tool 10 also includes a light assembly 70 comprising a light ring 72 at one end of a fiberoptic bundle 74 that extends the length of the dental suction tool 10. Adjacent, but slightly separated from the light ring 72 is an alignment cylinder 78 which assists in properly aligning the light assembly 70 on the interior of the dental suction tool 10 when all of the elements of the dental suction tool 10 are assembled together into its working state.

The valve body 40 includes a suction tip passageway 48 which opens at the end of the conical end section 43 in which is inserted the disposable suction tip 80. The suction tip 80 may have a number of configurations as will be further explained herein.

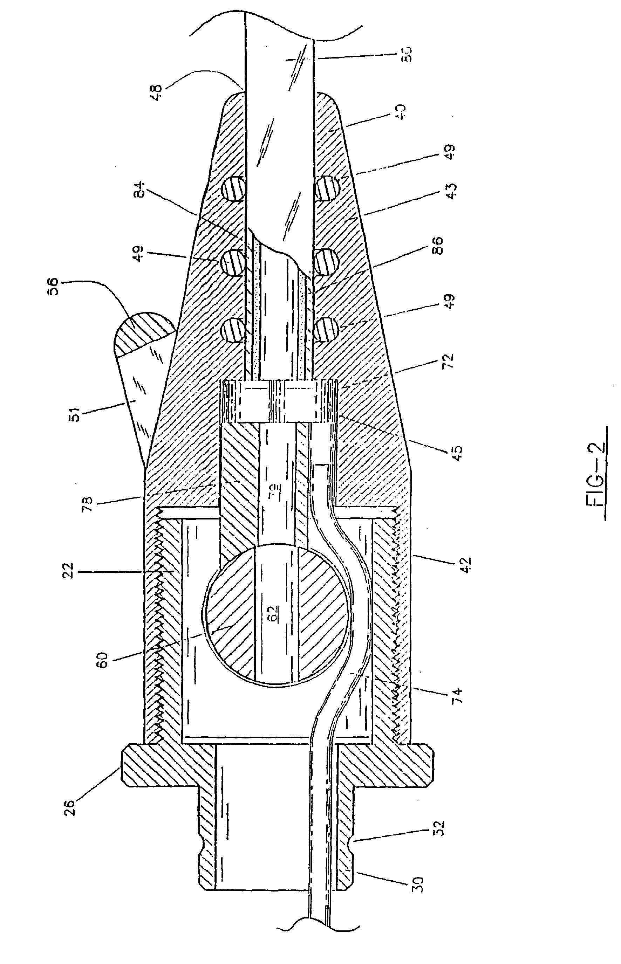

Figure 2 shows in cross section the dental suction tool 10 in an assembled condition with the lever 50 set so that the rotating cylinder 60 is open to allow the vacuum source to provide suction to the suction tip 80. The valve body 40 has a light ring cavity 45 that receives the light ring 72 and the alignment cylinder 78. When the suction tip 80 is inserted into the suction tip passageway 48 of the valve body 40, the end of the suction tip 80 abuts the light ring 72. The suction tip 80 is held securely inside the valve body 40 by means of one or more O rings 49 provided therein along the length of the suction tip passageway 48. By simply pulling out the suction tip 80, a new suction tip 80 can be inserted into the valve body 40 for each new patient thereby maintaining a clean and sanitary suction tool and the elimination of any possible cross contamination between patients.

Activation of the power supply to the light assembly 70 transmits light through the fiberoptic bundle 74 and into the light ring 72. The light emitting from the light ring 72 is transmitted along the length of the suction tip 80 and out the end thereof into the patient's oral cavity.

In the embodiment of the invention shown in Figure 2, the suction tip 80 is a bi-layered extrusion. The inner layer is a fiberoptic tubing 86 which will transmit the light from the light ring 72 along the length of the fiberoptic tubing 86 and out its end into the patient's mouth. The outer layer is plastic layer 84 which can be clear or opaque as desired. In the preferred embodiment, the plastic layer 84 should be a clear light-transmitting plastic material which can also transmit light from the light ring 72 along the length of the plastic layer 84.

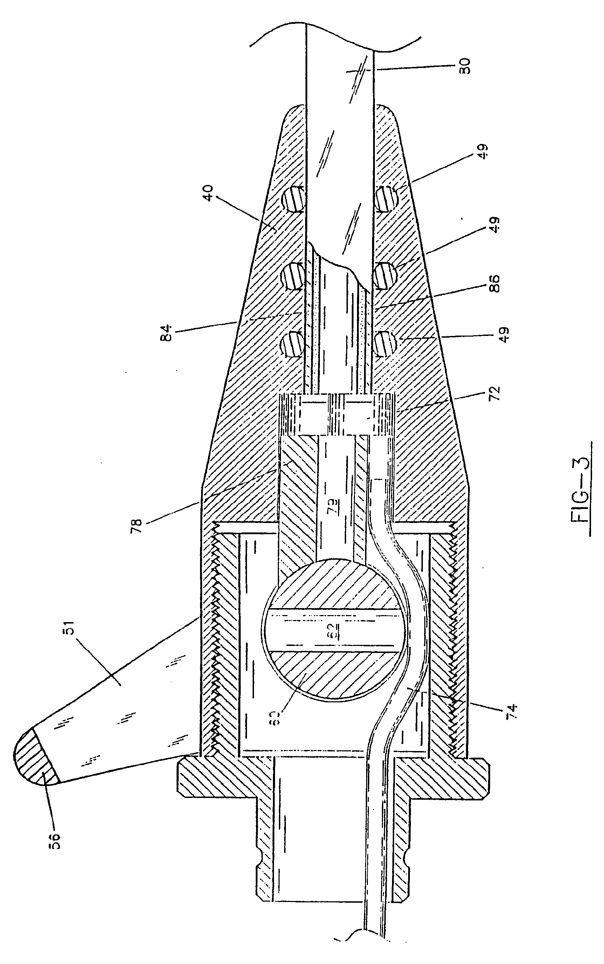

When the lever 50 is rotated approximately 90° as shown in Figure 3, the rotating cylinder 60 likewise rotates approximately 90°. This disassociates the cylinder passageway 62 from the alignment cylinder passageway 79 and no suction will be provided to the suction tip 80. However, light from the light ring 72 will continue to be transmitted along the length of the suction tip 80 and into the patient's oral cavity as long as power is supplied to the fiberoptic bundle 74. This allows the dental suction tool 10 to function as a light source even when suction is not required for a particular dental procedure.

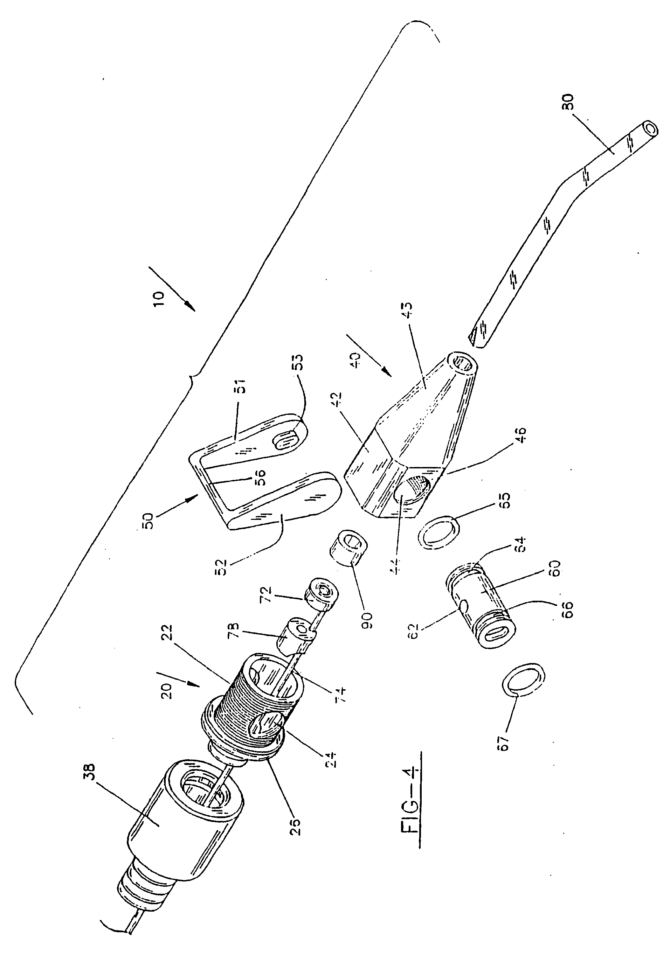

Figures 4-6 show a modification of the dental suction tool 10 of the present invention. Like reference numerals are used to identify the elements from Figures 1-3 that are the same in Figure 4-6.

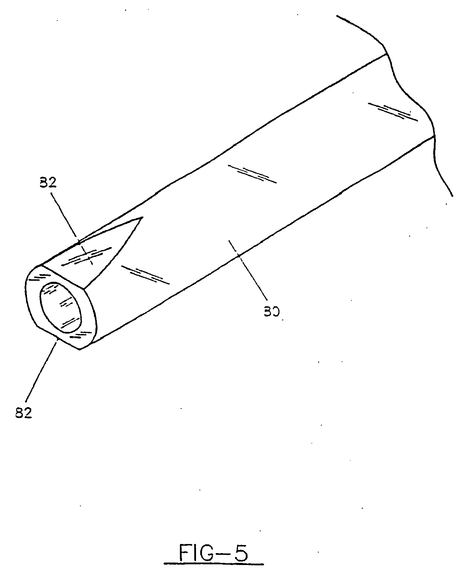

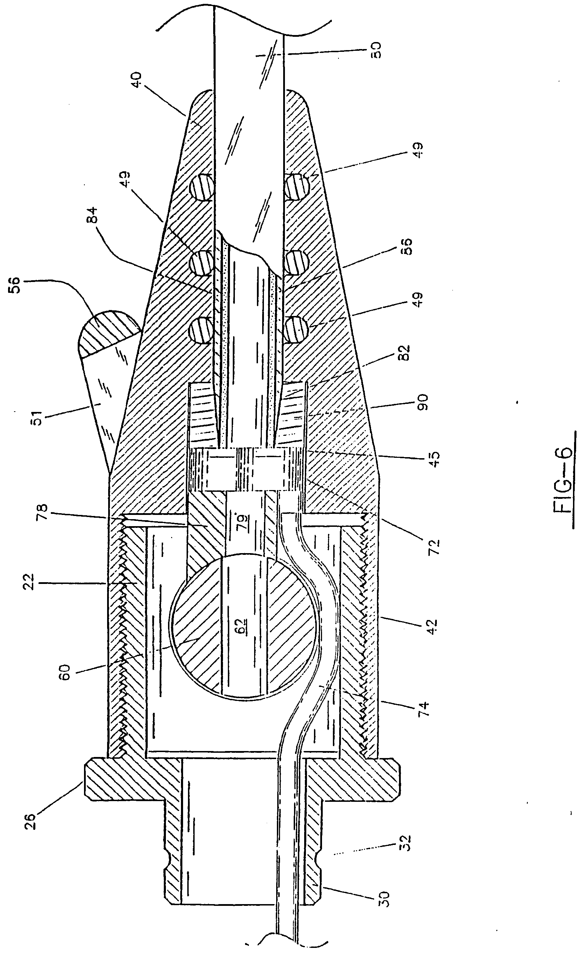

In Figures 4 and 6, a tip insertion block 90 is added to the rear cavity 45 in front of the light ring 72. As shown in Figures 5 and 6, the tip insertion block 90 has beveled top and bottom portions on its internal bore that correspond to the beveled sections 82 on diametrically opposed sides in the outer wall surface of the suction tip 80. In the preferred embodiment of the present invention as shown in Figure 5, the beveled sections 82 are formed in the outer wall surface of the suction tip 80. As the suction tip 80 is inserted into the valve body 40, the beveled sections 82 align with the beveled top and bottom portions on the interior of the tip insertion block 90 and effect the proper alignment of the suction tip 80 in the valve body 40.

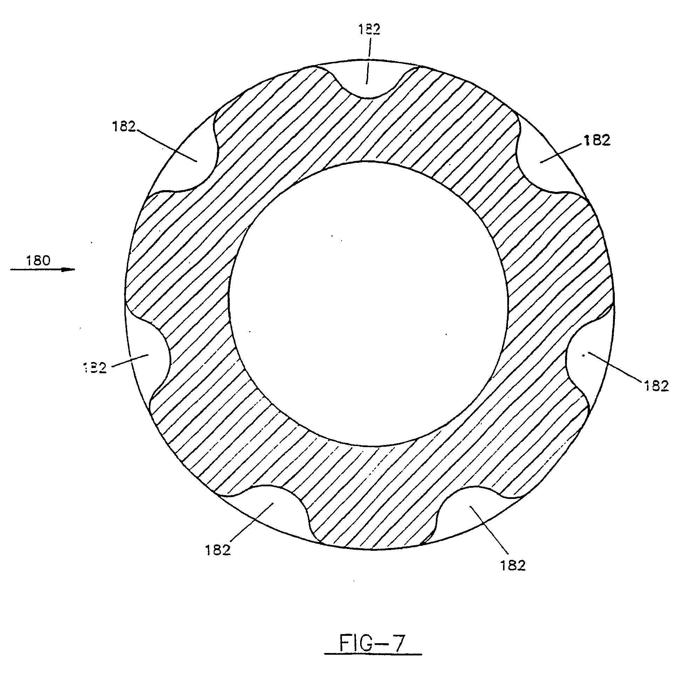

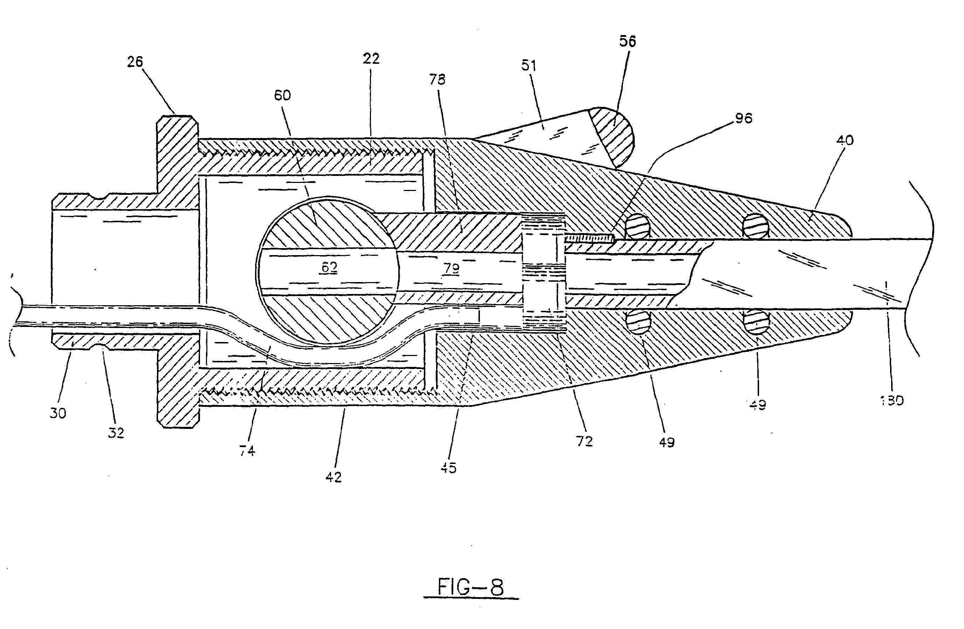

Figures 7, 8 and 9 show another modification of the dental suction tool 10 of the present invention. Like reference numerals are used to identify the elements from Figures 1-3 that are the same in Figure 7 and 8.

In Figures 7, 8 and 9, a key 96 is added to the interior of the valve body 40 in front of the light ring 72. This key 96 will act as an alignment device when the suction tip 180 is inserted into the valve body 40.

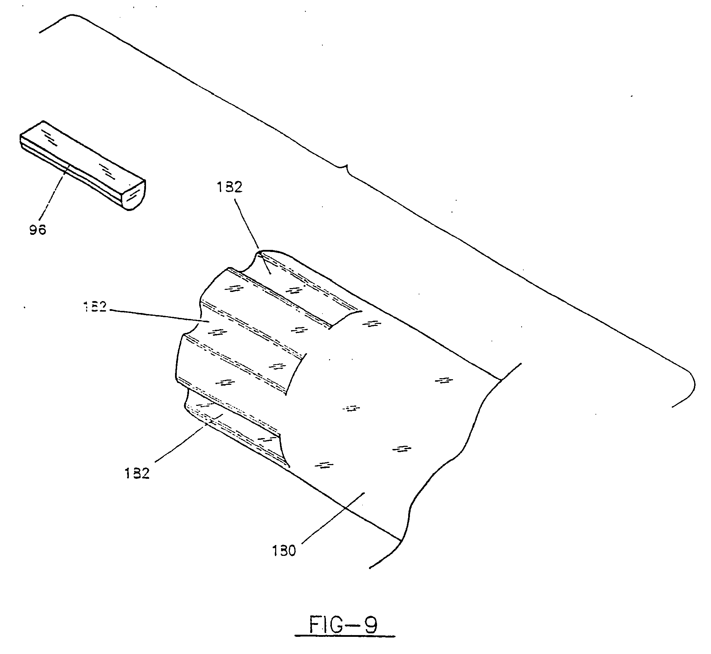

As shown in Figures 7 and 9, the suction tip 180 has a plurality of recesses 182 that are positioned around the circumference of the suction tip 180 in the outer wall surface thereof in equally spaced locations. In the preferred embodiment of the present invention as shown in Figures 7 and 9, the recesses 182 are formed in the outer wall surface of the suction tip 180. When the suction tip 180 is inserted into the valve body 40, one of the recesses 182 aligns with the key 96 and effects the proper alignment of the suction tip 180 in the valve body 40. Since the suction tip 180 has a slight bend therein, by providing a plurality of recesses 182 around the circumference of the suction tip 180, a dentist may orient the suction tip 180 in a number of directions to permit the suction tip 180 to be utilized in any desired manner by the dentist.

Figure 8 also shows another embodiment of the suction tip 180 which eliminates the fiberoptic layer on the inside of the suction tip. In this embodiment, a clear plastic material that is light transmitting is used for the suction tip 180. When the light ring 72 is activated, light emitting therefrom will travel through the body of the suction tip 180 and be emitted from the end thereof. This embodiment simplifies the manufacturing of the suction tip 180 and lowers its cost.

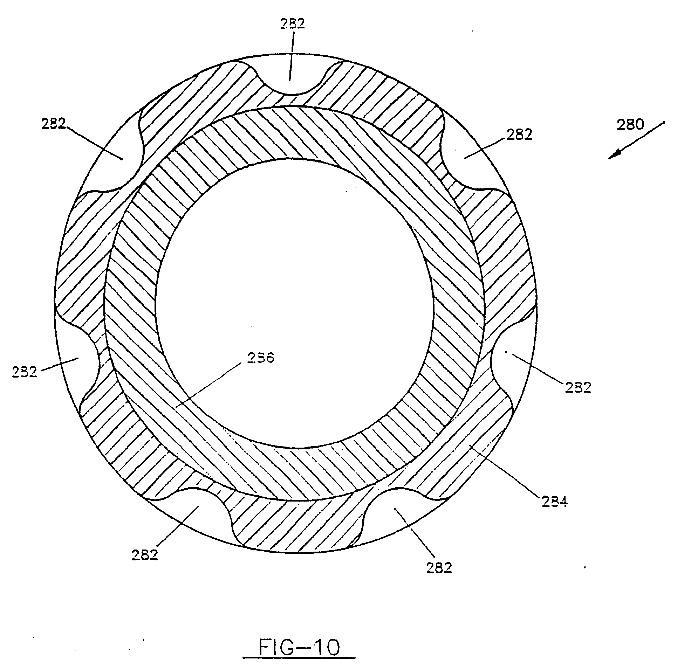

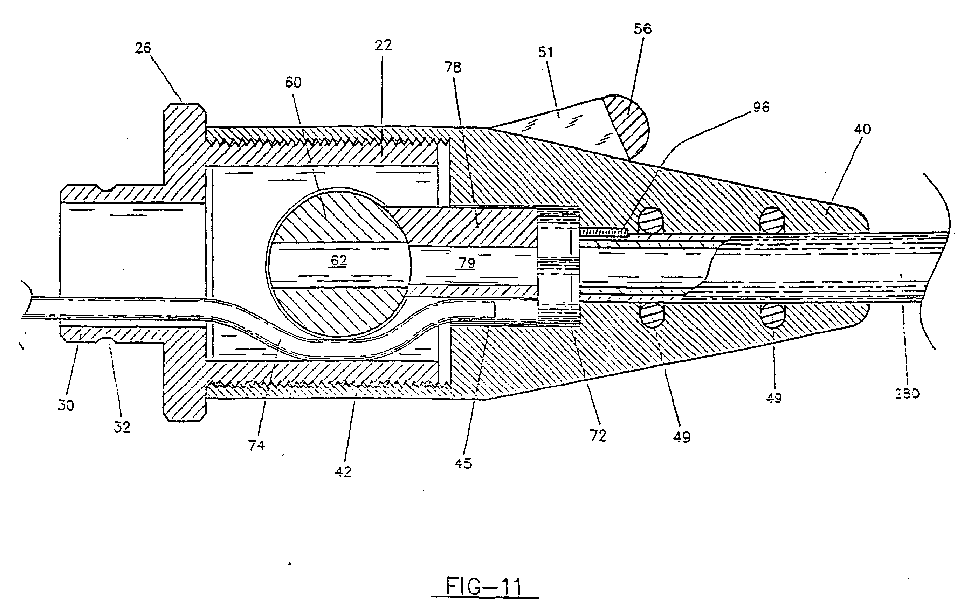

Figures 10 and 11 show still another modification of the dental suction tool 10 of the present invention. Like reference numerals are used to identify the elements from Figures 1-3 that are the same in Figures 9 and Figure 10.

The embodiment of the invention shown in Figures 9 and 10 also use the key 96 that is added to the rear cavity 45 in front of the light ring 72. This key 96 will act as an alignment device when the suction tip 280 is inserted into the valve body 40.

The suction tip 280 also eliminates the fiberoptic layer on the inside of the suction tip. In this embodiment, the suction tip 280 is comprised of two extruded layers of plastic material, an outer layer 284 of opaque material and an inner layer 286 of clear plastic material that is light transmitting. The suction tip 280 has a plurality of recesses 282 that are positioned around the circumference of the suction tip 280 in the outer wall surface thereof in equally spaced locations. In the preferred embodiment of the present invention as shown in Figures 9 and 10, the recesses 282 are formed in the outer wall surface of the suction tip 280. When the light ring 72 is activated, light emitting therefrom will travel through the inner layer 286 of the suction tip 280 and be emitted from the end thereof. The outer layer 284 being opaque will prevent light loss through the lateral sides of the suction tip 280 so that the light intensity emitted from the end of the suction tip 280 is increased. Alternatively, instead of using an opaque outer layer that has been coextruded, it is also within the scope of the invention to apply a coating of opaque material to the outer surface of the inner layer to minimize the loss of light through the outer surface of the suction tip 280.

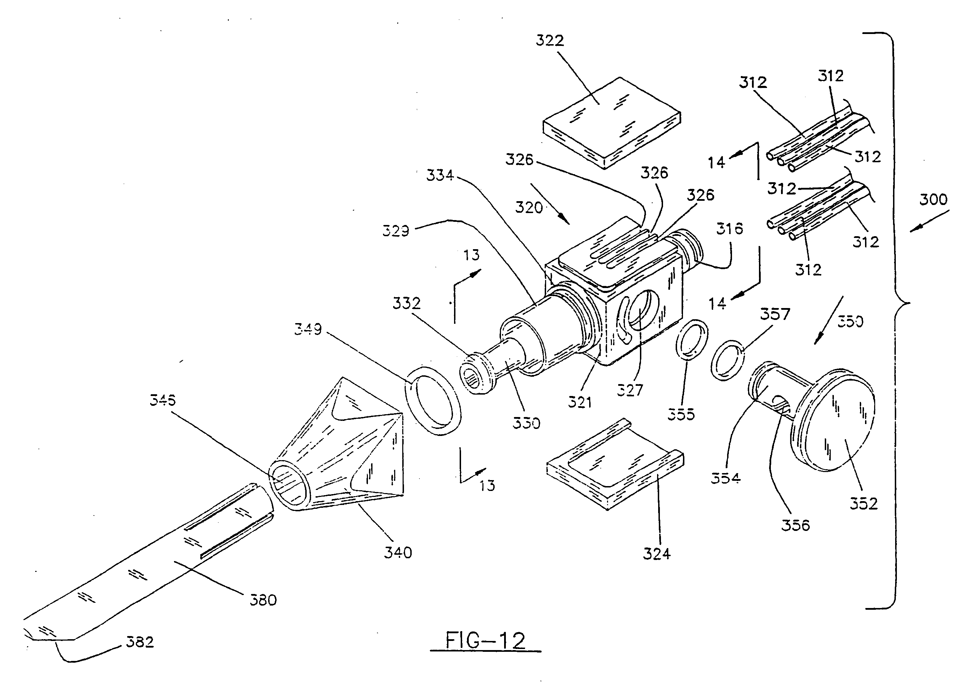

Another embodiment of the dental suction tool of the present invention is shown generally at 300 in Figure 12. The dental suction tool 300 comprises a valve body 320, a tip holder 340, a rotating cylinder 350 and a plurality of fiberoptic bundles 312. A suction tip 380 is mounted in the tip holder 340 and the entire dental suction tool 300 is connected to a source of vacuum and electrical power (not shown).

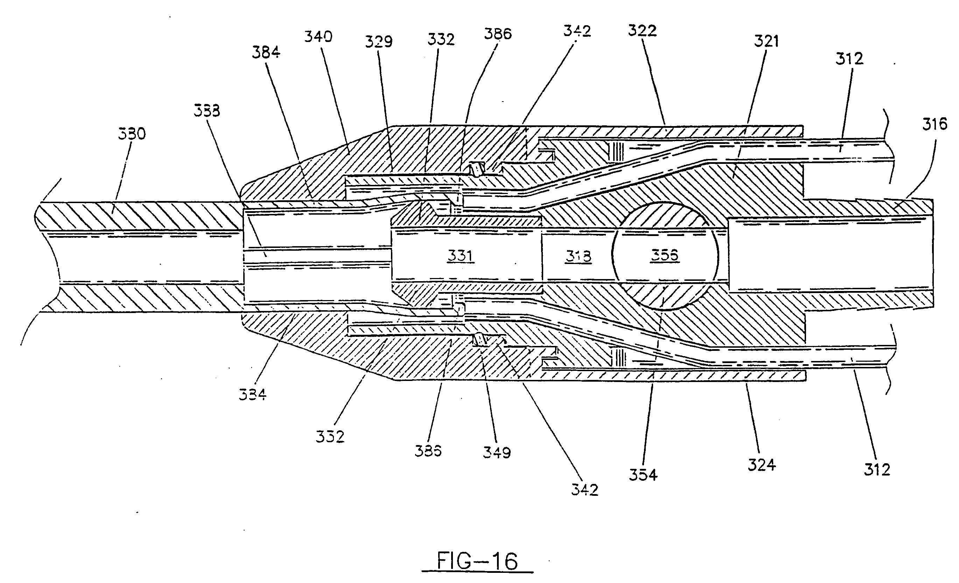

The valve body 320 comprises a main section 321 including a suction line connector 316 integrally formed therewith. The main section 321 and the suction line connector 316 have a passageway 318 extending therethrough so that the source of vacuum can be provided to the suction tip 380. On the top of the main section 321 are a plurality of fiberoptic bundle channels 326 in which are seated the fiberoptic bundles 312 and a top valve body cover 322 is placed thereover by any suitable fastening means, such as the interlocking shoulder assembly shown in Figure 15. The bottom of the main section 321 also has a plurality of fiberoptic bundle channels (not shown, but similar to channels 326) which also seat the fiberoptic bundles 312 and are covered by the bottom valve body cover 324 which is also held in place by any suitable fastening means, such as the interlocking shoulder assembly shown in Figure 15. The fiberoptic bundles 312 extend through the main section 321 and terminate on the interior of the main section 321 at the point in which the main section 321 joins to the main section extension 329. This allows the light emitting from the end of the fiberoptic bundles 312 to interact with the end of the suction tip 380 as will be explained further herein. As an alternative to the use of fiberoptic bundles 312, any suitable light transmitting conduits may be used; as few as one light transmitting conduit can be used as long as the intensity of the light transmitted through the light transmitting conduit to the suction tip and from there into the patient's oral cavity is sufficient to provide the desired amount of illumination.

On each of the diametrically opposite sides of the valve body 320, an aperture 327 is provided of sufficient diameter to receive the rotating cylinder 350 therethrough when the dental suction tool 300 is assembled. The rotating cylinder 350 comprises a cylinder body 354 having a passageway 356 therethrough and the rotating cylinder 350 is held in place inside the valve body 320 by means of O ring 355 and O ring 357. The rotating cylinder 350 also has a cylinder cap 352 which can be gripped by the user to effect rotation of the rotating cylinder 350 to open and close the passageway 356 relative to the passageway 318 to control the suction provided to the suction tip 380.

At one end of the main section 321 there is a main section extension 329 that comprises a hollow cylindrical body. This main section extension 329 surrounds a bushing extension 330 which is press fit into a recess in the main section 321. The bushing extension 330 has a tip bushing 332 thereon. The tip bushing 332 preferably has a circumferential conical shape to receive the end of the suction tip 380 as will be explained herein. The bushing extension 330 also has an internal passageway 331 aligned with the passageway 318. At the approximate junction of the main section extension 330 with the main section 321, there is provided a groove 334 which receives an O ring 349.

Also provided is a tip holder 340 which is preferably a conically-shaped member. The wide end of the tip holder 340 has an interior circumferential shoulder 342 that cooperates with the O ring 349 to hold the tip holder 340 in place when it is assembled onto the valve body 320.

The tip holder 340 includes a suction tip passageway 348 which opens at the end of the tip holder 340 and in which is inserted the disposable suction tip 380.

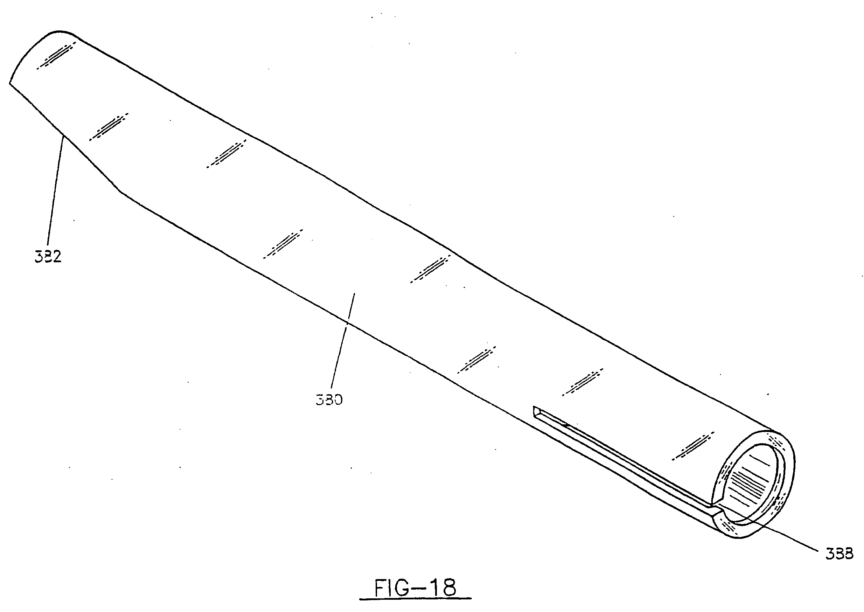

The details of one of the preferred embodiments of the suction tip 380 are shown in Figure 17. The suction tip 380 is a generally cylindrical hollow member having at one end a beveled section 382. At the opposite end of the suction tip 380, there are provided a plurality of fingers 384. In the preferred embodiment of the present invention, four slots 388 are shown equally spaced around the circumference of the suction tip 380. While the maximum depth of the slots 388 should not exceed the axial length of the tip holder 340 (in order to maintain the vacuum inside the suction tip 380), the minimum depth of the slots 388 should not be less than 0.125". The slots 388 create a plurality of fingers 384 at the end of the suction tip 380. The end of each finger 384 is provided with an interior shoulder 386 of the appropriate size to interact with the tip bushing 332 on the bushing extension 330.

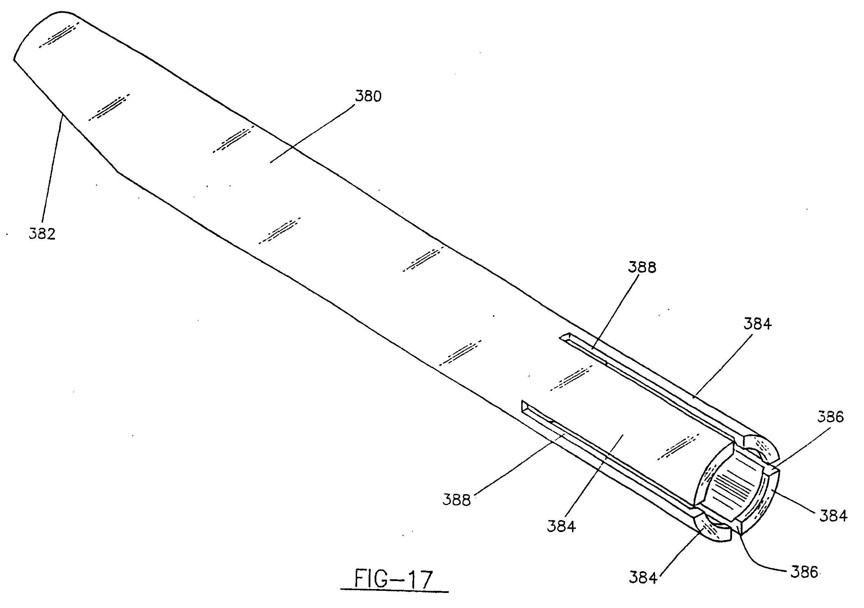

Figures 15 and 16 show the assembly of the dental suction tool 300. The O ring 349 is mounted into the groove 334. The tip holder 340 is positioned over the bushing extension 330 and is snapped into place by means of the shoulder 342 interacting with the O ring 349. The end of the suction tip 380 having the fingers 384 is inserted into the tip holder 340 and pushed therein until the fingers 384 spread out and hook over the tip bushing 332 on the bushing extension 330. The shoulders 386 on the interior of the fingers 384 interact with the tip bushing 332 to prevent the suction tip 380 from simply falling out of the tip holder 340, but the suction tip 380 is flexible enough to allow the suction tip 380 to be manually removed and replaced with a new suction tip 380 when needed.

When the suction tip 380 is inserted into the suction tip passageway 348 of the tip holder 340 and pushed onto the tip bushing 332, the end of the suction tip 380 is positioned adjacent the ends of the fiberoptic bundles 312 so that light emitting from the ends of the fiberoptic bundles 312 can be transmitted into the suction tip 380. By simply pulling out the suction tip 380, a new suction tip 380 can be inserted into the tip holder 340 for each new patient thereby maintaining a clean and sanitary suction tool and the elimination of any possible cross contamination between patients.

Activation of the power supply transmits light through the fiberoptic bundles 312. The light emitting from the fiberoptic bundles 312 is transmitted along the length of the suction tip 380 and out the end thereof into the patient's oral cavity.

Other modifications can be made to this embodiment. As shown in Figure 18, the suction tip 380 can be made with a single slot 388 instead of the four slots 388 shown in Figure 17. In this single slot 388 embodiment, there is still enough flexibility in the plastic material so that the open end of the suction tip 380 can expand around the tip bushing 332 and be held in place. As long as at least one slot 388 is used, the suction tip 380 is functional. More than one slot may also be used.

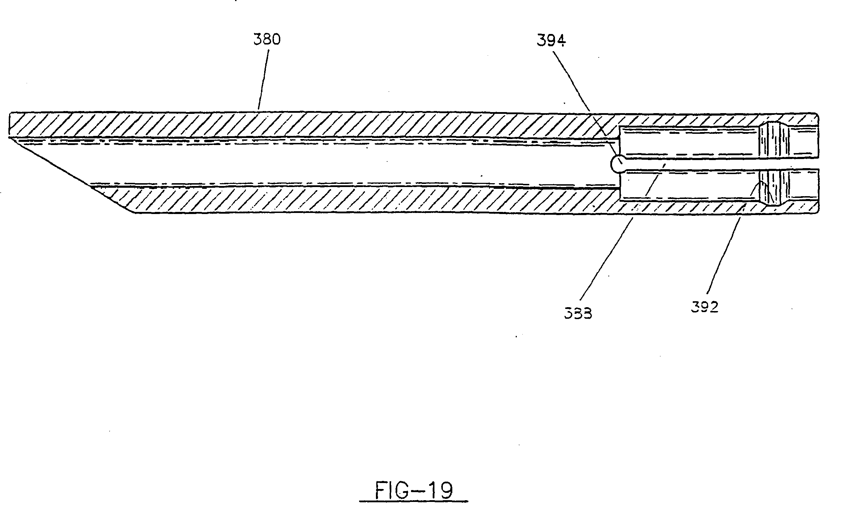

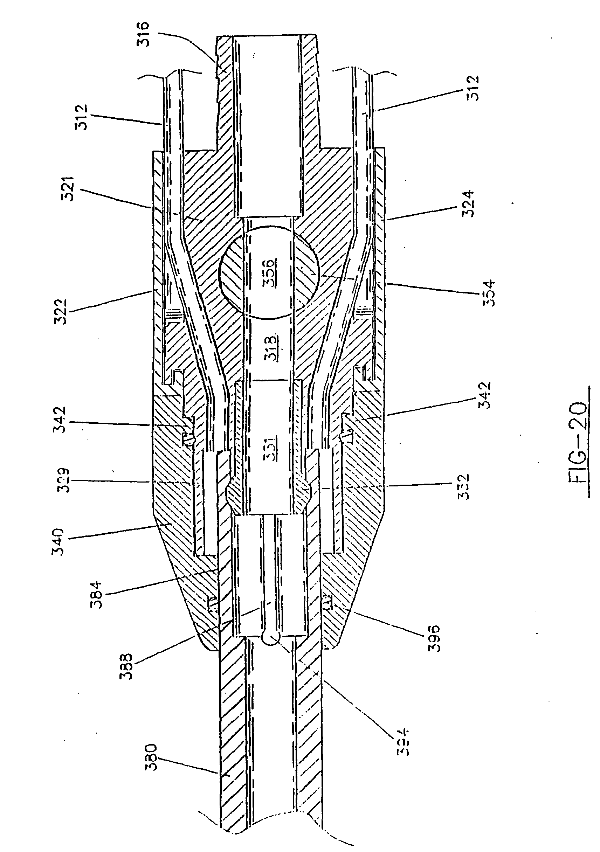

Figures 19 and 20 show another modification of the suction tip 380 of the present invention. In this embodiment, the shoulder 386 is omitted and an internal groove 392 is used in its place. When the suction tip 380 is pushed onto the tip bushing 332, the tip bushing 332 sets into the internal groove 392 to hold the suction tip 380 in place. One or more slots 388 are required, such as the two diametrically opposed slots 388 shown in Figures 19 and 20. Additionally, a vacuum relief aperture 394 can be provided at the closed end of the slot 388. Also, to provide additional gripping pressure on the suction tip 380, an O ring 396 can be included in the tip holder 340.

In the preferred embodiment of this modification, a clear plastic material that is light transmitting is used for the suction tip 380. Suitable materials that can be used are acrylics, cellulosics and other light conducting plastics.

While the invention has been illustrated with respect to several specific embodiments thereof, these embodiments should be considered as illustrative rather than limiting. Various modifications and additions may be made and will be apparent to those skilled in the art. Accordingly, the invention should not be limited by the foregoing description, but rather should be defined only by the following claims.

## Claims

1. A suction tip (80) for use in a dental suction tool comprising a plastic material formed as a generally cylindrical hollow tubing, one end of the suction tip having at least one bevelled section (82) formed in an outer wall surface of the suction tip so that the suction tip can be properly aligned in the dental suction tool.

2. The suction tip of claim 1 in which the suction tip (80) comprises light transmitting material.

3. The suction tip of claim 1 in which the suction tip (280) comprises an inner layer (286) of light transmitting material and an outer layer (284) of opaque material..

4. The suction tip of claim 3 in which the outer layer (284) is a coating applied to the inner layer (286).

5. The suction tip of claim 1 in which the suction tip comprises an inner layer of fibreoptic material and an outer layer of plastic material.

6. The suction tip of claim 5 in which the outer layer is light transmitting material.

7. The suction tip of claim 5 in which the outer layer is opaque material.
